(19) Europäisches Patentamt
European Patent Office
Office européen des brevets

(11) **EP 4 209 798 A1**

(12) **EUROPEAN PATENT APPLICATION**

(43) Date of publication:
**12.07.2023 Bulletin 2023/28**

(21) Application number: **23150564.5**

(22) Date of filing: **06.01.2023**

(51) International Patent Classification (IPC):
**G01S 5/02** *(2010.01)*          **G01S 5/14** *(2006.01)*

(52) Cooperative Patent Classification (CPC):
**G01S 5/02213; G01S 5/0205; G01S 5/14;**
G01S 5/0063; G01S 5/0081

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.01.2022 US 202263266487 P**
           **12.07.2022 US 202217862728**

(71) Applicant: **Wi-LAN Research Inc.**
**Vista, CA 92081 (US)**

(72) Inventors:
• **MUMTAZ, Arslan**
  **Islamabad (PK)**
• **NOMAN, Zain**
  **Islamabad (PK)**
• **RAMZAN, Rashad**
  **Islamabad (PK)**
• **FAROOQ, Muddassar**
  **Islamabad (PK)**
• **STANWOOD, Kenneth**
  **Vista (US)**

(74) Representative: **Mewburn Ellis LLP**
**Aurora Building**
**Counterslip**
**Bristol BS1 6BX (GB)**

(54) **SECURE LOCATION OF WIRELESS DEVICES USING LEO SATELLITE ASSISTANCE**

(57)    A method and system for finding the true geolocation coordinates of User Equipment (UE) using a communication network and system based on Non-Terrestrial Network (NTN). The system uses precision clock signals of a UE and satellites in an NTN. Using the time of arrival method disclosed in the invention, a trusted satellite can compute the location of a UE by processing positioning signals. Consequently, satellites accurately compute the true location of UE and store it on satellites in the space and/or database server connected with the ground station. The invention enables accurate delivery of shipments in a logistic network.

**Description**

**CROSS REFERENCE TO RELATED APPLICATION**

This patent application claims the priority benefit under 35 U.S.C. § 119(e) of U.S. Provisional Application No. 63/266,487, filed on January 6, 2022, the contents of which are herein incorporated by reference.

**FIELD OF THE INVENTION**

The invention described herein discloses a location finding system and method that uses a Low Earth Orbiting satellites (LEOs) based Non-Terrestrial Network (NTN) to provide the accurate geolocation of a wireless communication device in advanced wireless communication systems such as 5G, 6G, and industry 4.0. The proposed system and method enable reliable and secure location-based services on next generation smart computing and communication devices.

**BACKGROUND OF THE INVENTION**

Current and future wireless and mobile communication systems are planned to have a high data rate and ubiquitous global connectivity that will result in an exchange of data among trillions of devices, including but not limited to smart devices like wearable smart healthcare devices, IoT sensors and control devices, and e-commerce and Fintech nodes including digital wallets. These devices demand ultra-reliable and low latency communication networks. The terrestrial network infrastructure and traditional mobile wireless networks alone might not be able to meet the demands of such networks. NTNs such as Starlink are already being deployed, and the third-generation partnership project (3GPP) recommends using LEOs in 5G networks and beyond.

For many uses, it is desirable to know the location of wireless devices, collectively referred to as user equipment (UE) herein. Satellite-based location systems such as the US Global Positioning System (GPS) or the European Global Navigation Satellite System (GNSS) are ubiquitous. However, GPS and similar systems cannot always be relied upon by the UE to securely determine its own location. It has been proven that a malicious entity can transmit fake GPS signals, causing a device to think it is somewhere it is not. This attack could be applied, for instance, to delivery drones to cause them to deliver their cargo to the wrong location. It is desirable to have a system that allows a device to be confident of its location.

Applications in which the geolocation of a user is used to provide certain services are termed as location-based services (LBS). In LBS, a UE sends its location information to service providers that provide value added services based on the location of UE. Currently, UE uses time signals from geo-positioning satellites, such as GPS or GNSS, to calculate its geolocation within an accuracy of few meters. The UE then sends its location coordinates to service providers to get a service. Since LBS assume a trustworthy network, no reliable method exists for the service providers to verify that a UE is at the location where it claims itself to be. As a result, malicious actors could fake positioning system to believe the fake location of UE to be the true location or try to compromise the system so that the location of another UE is incorrectly calculated.

Continuing advancements in the design and manufacturing of satellites are making it possible to develop satellites that may have even more memory and processing power. This opens vistas of new technologies and services that were previously not possible to implement or provide using NTNs. In many applications, it is important to accurately and securely determine the geolocation of UEs so that malicious users or adversaries cannot corrupt the UEs' locations to gain any advantage meant for legitimate users only or to deny service to them. To achieve this objective, a location finding method using NTNs is herein disclosed.

**SUMMARY OF THE INVENTION**

A method and system for finding the accurate geolocation of UEs in communication with NTNs is described. To solve the problem of an adversary faking GPS or similar signals, rather than the UE using a public location information source that only sends information, the UE communicates with a trusted location information source to determine its location. In an embodiment, the trusted location information source is a constellation of Low Earth Orbit (LEO) satellites, such as the Starlink system or a 5G satellite system. Upon full deployment, Starlink and other LEO constellations will have sufficient satellites deployed such that a UE will be in communication range of three or more satellites at most of the times.

The invention is described herein for an exemplary embodiment of UEs communicating with NTNs composed of LEOs. However, in other embodiments the invention may be comprised of other NTNs such as those using Unmanned Aircraft Systems (UAS) or High-Altitude Platform stations (HAPs). In an alternate embodiment, the trusted location information source is a deployment of sufficiently dense terrestrial broadband base stations such as a deployment of 5G femtocells. Hybrids of two or more such systems are also possible.

The UE transmits a signal to a plurality of LEOs, allowing them to take measurements from which the UE's position may be calculated. The LEOs are assumed to be a trusted part of the network. The UE transmits the signal to a plurality of satellites in order to have a sufficient number of different measurements, available to LEOs, to determine the UE's position by trilateration or other methods known to one skilled in the art. Depending upon the algorithm chosen and the necessary accuracy, 3 or 4 LEOs taking measurements is typically sufficient in the exemplary embodiment for a terrestrial UE communicating with LEOs as described herein. In the exemplary embodiment, to enable the measurement and calculations, a UE must send a positioning signal at a known time to 3 or more LEOs. Additionally, in the system as a whole, each LEO must be able to receive a positioning signal from more than one UE. Preferably, the UE multicasts the positioning signal to the chosen set of LEOs simultaneously. Alternatively, it may unicast the positioning signal to each of the chosen LEOs in a sequence. Frame structures and protocols for enabling this communication are described herein. The measurements collected on the positioning signal by the plurality of chosen LEOs are used to compute the UE's position, which may be distributed to a variety of recipients, including the UE, directly from the trusted source.

In the exemplary embodiment, a minimum of three or four satellites, depending upon the trilateration algorithm used, are required to receive a positioning signal from a UE. The satellites that are responsible for directly receiving a positioning signal from a UE form a cluster and are referred to herein as Cluster Member Satellites (CMS). The CMSs will transmit the parameters of their reception of the positioning signal (e.g., time of arrival, etc.) to an entity responsible for computing the location of the UE. This entity may be one of the satellites themselves, a separate satellite designated to this task, or a ground station etc.

Without the aid of GPS or some other positioning system, the UE needs a highly accurate clock with the accuracy that is determined by the requirements of an application. For instance, flying a delivery drone requires more accurate position determination than asking Google Maps for the location of the nearest Starbuck. For instance, the use of a Chip Scale Atomic Clock (CSAC) not only allows calculating the geolocation in the presence of as few as three satellites with an accuracy of a meter but also provides better tracking of satellites. The use of highly accurate clocks may also remove the error introduced due to receiver and clock biases.

## BRIEF DESCRIPTION OF THE DRAWINGS

The accompanying drawings, which are incorporated in and constitute part of this specification, illustrate embodiments of the invention and, together with the description, serve to explain the principles of the invention. The embodiments herein illustrate the invention for NTN composed of LEOs; however, it can be adapted to other NTNs such as those using UAS or HAPs. Furthermore, the embodiments illustrated herein are presently preferred, it being understood by those skilled in the art, however, that the invention is not limited to the precise arrangements and instrumentalities shown, wherein:

Figure 1 is a system-level illustration of the present invention where principal components are depicted as blocks, and the interconnecting lines represent their communication links;

Figure 2 is a functional block diagram of the UE according to the aspect of the invention;

Figure 3 is a functional block diagram of a CMS and represents one of the plurality of CMSs that receive a positioning signal transmitted by UE;

Figure 4 depicts the protocol ladder diagram illustrating exemplary message exchange between the entities involved in determining the UEs position;

Figure 5 shows flowchart illustrating the functionality of a position computation entity;

Figure 6 illustrates two embodiments of PHY frames that provide opportunities to transmit positioning signals;

Figure 7 illustrates an embodiment of the structure of a positioning signal opportunity;

Figure 8 illustrates a method to determine the duration of the Late Rx Guard and Early Rx Guard;

Figure 9 illustrates the determination of duration of positioning signal opportunity;

Figure 10 shows the preferred embodiment of the structure of the positioning information data frame, received by a position computation entity, from a plurality of CMS in the cluster that is taking position measurements;

Figure 11 illustrates a technique for using a signal quality metric, such as RSS, to choose the satellites that will form a cluster and act as CMS for determining the position of a UE;

Figure 12 depicts an aspect of the invention that describes the trilateration method for finding the location of UE in a two-dimensional space;

Figure 13 illustrates the location finding method of trilateration in a three-dimensional space;

Figure 14 illustrates an embodiment of a dedicated CHS that has a large memory and computing power enabling it to act as a position computation entity;

Figure 15 shows an aspect when CMSs might be shared among multiple clusters.

**DETAILED DESCRIPTION OF THE INVENTION**

The figures and their corresponding embodiments provided in this disclosure are aspects of the present invention, and their advantages may be understood by referring to the figures and the following description. The descriptions and features disclosed herein can be applied to accurately determine the geolocation of UEs in NTNs using LEOs; however, it can be adapted to other NTNs such as those using UAS or HAPs. Henceforth, the figures and embodiments depicted are for the sole purpose of clarity and by any means do not limit the scope of the invention.

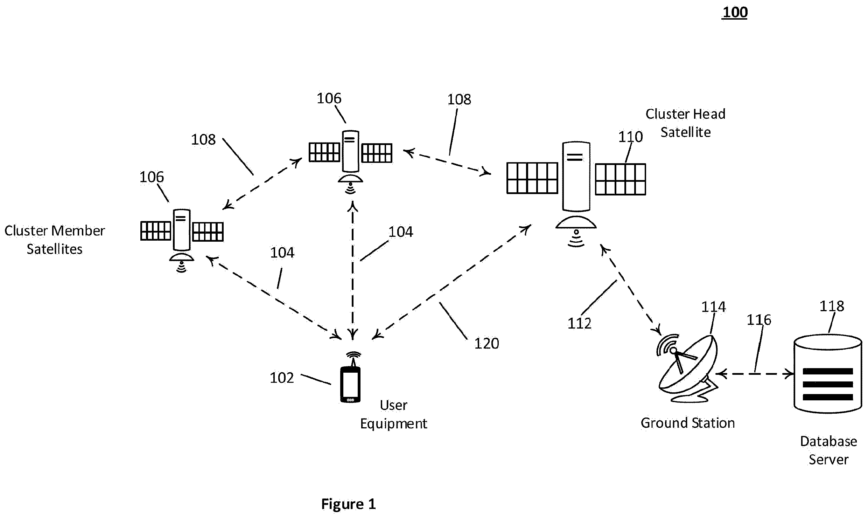

**Figure 1** is a system-level illustration of an embodiment of the disclosed invention where the principal parts are interconnected through communication links. According to an aspect of the invention, UE 102 can be a communicating device connected through an NTN comprised of LEOs including LEOs 106 and 110 which form a cluster. UE 102 is preferably synchronized to and in communication with a particular satellite 110 over communication link 120. Transmission of positioning signals by UE 102 can also be received by one or more cluster member satellites 106 over wireless links 104. Preferably, satellites 106 and 110 are in communication with each other via side links 108. Depending on the available computational power of the individual LEOs in a particular cluster, the role of a cluster head satellite, the satellite that gathers the data to compute the UEs true location, is assigned. In the preferred embodiment, satellite 110 which is in direct communications with UE 102 is chosen as Cluster Head Satellite (CHS) as shown in system illustration 100 to minimize data exchange. However, in alternate embodiments a different satellite may be assigned the role of CHS, or there may be no CHS with the positioning data gathered by and the position calculated by another entity such as UE 102, ground station 114, or a service in the cloud. In an embodiment, satellite 110 is connected to ground station 114 through communication link 112. Once the location information of UE 102 is calculated by CHS 110 or another entity, it may be sent to ground station 114 and may be forwarded to database server 118 through communication link 116. The information may be stored by database server 118.

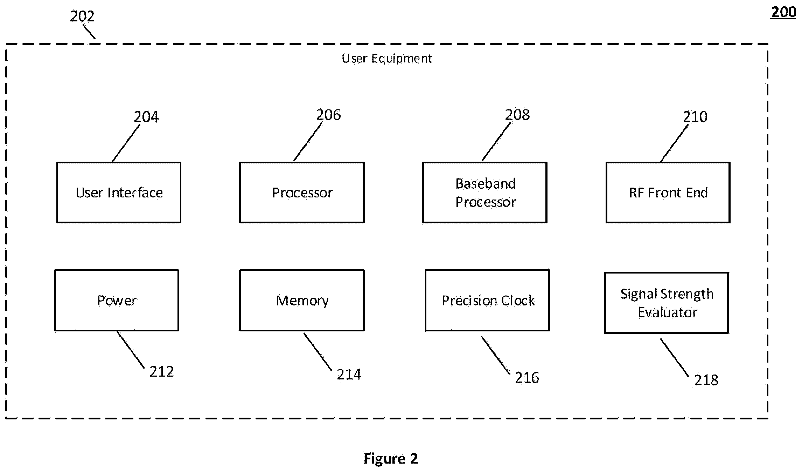

**Figure 2** is a functional block diagram of the UE 202. UE 202 is an embodiment of a UE 102 according to an aspect of the invention. An exemplary UE 202 may have a user interface 204, for example if UE 202 is a smartphone. UE 202 has a power module 212, for instance a battery and charging circuitry. UE 202 has a processor 206 and memory 214, for instance the application processor of a smartphone and its associated memory. UE 202 has a baseband processor 208 and RF front end 210, together comprising a transceiver for sending and receiving communications with satellites, as depicted in **Figure 1.** A precision clock module 216 is included in UE 202. In the case where a malicious actor fakes GPS signals, precision clock module 216 must be accurate enough to maintain synchronization with the satellites of the NTN. In one embodiment of the invention, precision clock module 216 may be a cesium-based atomic clock that utilizes a resonator with a radiation having an oscillating frequency of 9,192,631,770 Hz. Alternately, a Ytterbium-based or other low power and accurate clock module may be used for providing accurate time. UE 202 may contain a signal strength evaluator 218, which determines a quality metric which indicates how well it can receive a satellite's transmission. Exemplary metrics are received signal strength indication (RSSI), signal-to-noise ratio (SNR), and carrier-to-interference plus noise ratio (CINR).

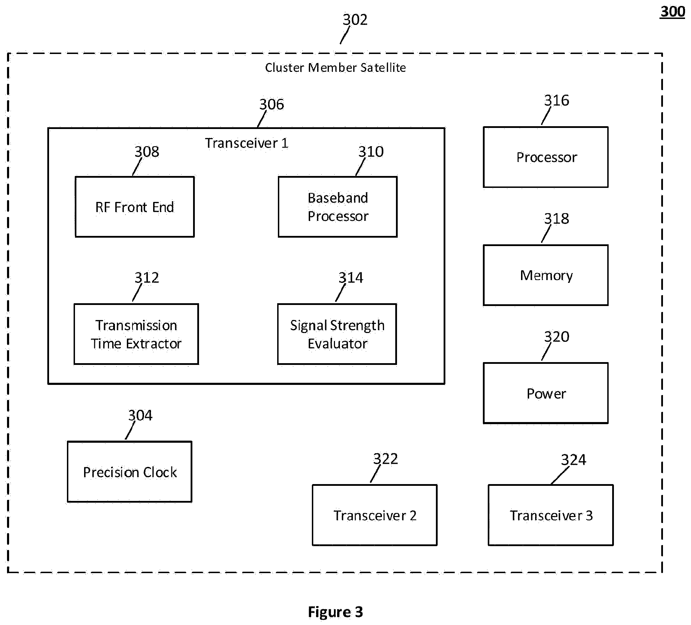

**Figure 3** is a functional block diagram of CMS 302 and represents one of the plurality of CMSs that receive a positioning signal transmitted by UE 202. CMS 302 is comprised of a processor 316 and memory 318 for providing computational power and storage for software, firmware, and data. Certain CMSs, for instance newer models, may be endowed with more processing power and memory than other CMSs. CMS 302 has a power module 320, which may include, for example, batteries, charging circuitry, and solar panels. CMS 302 has a precision clock 304 accurate enough to maintain synchronization with the UEs. CMS 302 has a first transceiver 306 for communication with UEs. First transceiver 306 is comprised of an RF front end 308 for transmitting, receiving, and processing RF signals; a Transmission Time Extractor module 312 for determining the time a positioning signal was received from a UE; a baseband processor 310 for performing baseband and other functionality related to transmitting and receiving communications with the UEs; and a signal strength evaluator 314 to measure the signal strength, or other metric such as SNR or CINR, of the signal received from a UE. CMS 302 may also include a second transceiver 322 for communication with ground stations and a third transceiver 324 for communication over side links with other satellites in the constellation.

In an embodiment, one criterion to choose the CMS 302 as a member of the cluster is the strength of the received signal from the UE. If the received signal strength (RSS) is below a threshold, synchronization with UE 202 cannot be established, and the Signal Strength Evaluator 314 determines that the CMS 302 is not a candidate for the cluster determining the position of the UE. If the received signal strength (RSS) evaluated by Signal Strength Evaluator 314 is above a threshold, the CMS 302 is a suitable candidate for the cluster determining the position of the UE. If a CMS 302 is a cluster member for a UE, the positioning signal is processed by the Transmission Time Extractor 312, which extracts the transmission time, $T_{trans}$, if present, of a positioning signal and determines the time the positioning signal from the UE arrived at CMS 302. This time is termed $T_{arrival}$. According to a further aspect of the invention, the MAC address of UE 202, or other ID that can uniquely identify it, and $T_{trans}$, the time the UE transmitted the positioning signal are transmitted with the positioning signal and extracted by transmission time extractor 312. $T_{arrival}$, $T_{trans}$ if present, and the device ID, if present, from the positioning signal are encapsulated in a message which CMS 302 may transmit to another satellite acting as the CHS via side link using transceiver three 324. Alternatively, if position processing is performed by a ground station, in the cloud or by some other terrestrial entity, CMS 302 transmits the data to the ground station via transceiver two 322.

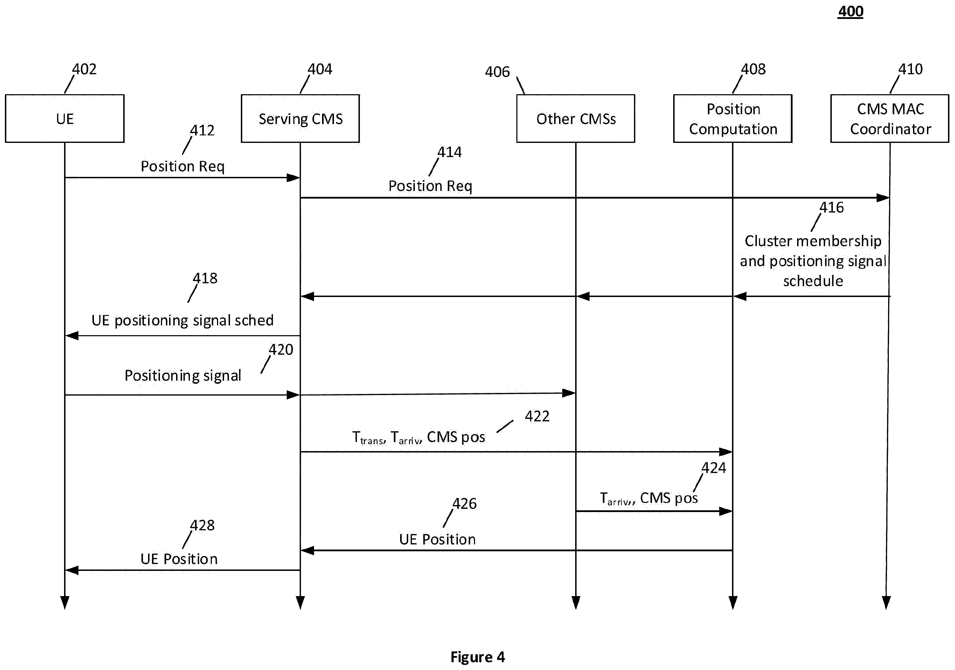

**Figure 4** depicts the protocol ladder diagram 400 illustrating exemplary message exchange between the entities involved in determining the UEs position. UE 402 is the UE that needs to find its location using trusted satellites for assistance. The serving CMS 404 is the CMS with which UE 402 is in direct communication for the purpose of sending and receiving user data. Which satellite performs these duties may change over time due to handovers caused by mobility of UE 402 and movement of the satellites along their orbits. Other CMS 406 are at least two other satellites that participate in taking the measurements necessary to determine the position of UE 402 but are not in communication with UE 402 for the purpose of sending and receiving user data as is the case with serving CMS 404. Position computation entity 408 is the entity that gathers the position data and computes the position of UE 402. Position computation entity 408 may reside in any one of the following: UE 402, a satellite nominated CHS out of the set of serving CMS 404 and other CMSs 406, a ground station or other operator equipment, or the cloud. CMS MAC coordinator 410 is responsible for scheduling multi-CMS events such as the broadcasting of a positioning signal by UE 402 and other UEs. CMS MAC coordinator 410 may reside in one of the satellites, in a ground station, or in the network operator's infrastructure.

When UE 402 needs to determine its position but cannot rely on GPS or other public positioning systems, it sends a position request 412 to its serving CMS 404. Serving CMS 404 then sends a position request 414 to CMS MAC coordinator 410. In an embodiment, position request 414 is a forwarding of position request 412 to the CMS MAC coordinator 410. In an alternate embodiment, position request 414 may be different than position request 412. For instance, position request 414 may contain the information from multiple position requests 412 from multiple different UEs 402. Position request 412 and position request 414 may also contain information regarding which other satellites a UE 402 can hear with sufficient quality (e.g., signal strength or SNR). For instance, if UE 402 can hear a satellite with sufficient signal quality to perform a handover the satellite should have sufficient signal quality to perform measurements of the UE 402 position. CMS MAC coordinator 410 processes the position requests. CMS MAC coordinator 410 determines which satellites will be other CMSs 406 for each UE 402 is requesting position assistance. In determining which satellites will be other CMSs 406, CMS MAC coordinator 410 may query (not shown) a number of satellites regarding their ability to perform the task, for instance, their loading or their ability to receive from UE 402. CMS MAC coordinator 410 determines the schedule for UEs 402 to send positioning signals. The CMS MAC coordinator 410 sends the cluster membership and positioning signal schedule 416 to the serving CMS 404, Other CMSs 406, and position computation entity 408, if it is not in one of the CMSs. The schedule preferably contains an indication of when a UE is to transmit, based on a system time common to members of the communication system (e.g., a particular location in a particular PHY frame), its positioning signal 420 and on what frequency channel, subchannel, or subchannels. Note that two or more UEs 402 may be scheduled for the same time and frequency resource. In this case, the schedule preferably contains an indication of means to distinguish the transmissions from two or more UEs 402 such as, for instance, orthogonal preambles or CDMA code.

Serving CMS 404 forwards to UE 402 the UE positioning signal schedule 418, which comprises at least the portion of the positioning signal schedule 416 pertaining to UE 402. The UE positioning signal schedule 418 describes when the UE shall transmit and on what frequency channel, subchannel, or subchannels. It may also indicate preambles, CDMA codes or other parameters of the transmission. UE positioning schedule 418 may contain information unicast to a single UE 402 or it may contain information multicast or broadcast to multiple UEs 402 served by the same serving CMS 404. Serving CMS 404 and Other CMSs 406 chosen to be part of the cluster for UE 402, listen for a positioning signal 420 from the UE 402 at the appropriate time, using the frequency and code-space resources indicated in the schedules. At the scheduled time and using the scheduled resources, UE 402 transmits a positioning signal 420. Since radio signals propagate through air at approximately the speed of light, if the serving CMS is at an exemplary altitude of 1000 kilometers, transmission from UE 402 will take approximately 1/300 of a second from when they are transmitted by UE 402 and when they are received by serving CMS 404. This time can be different depending upon how far UE 402 is from being directly beneath serving CMS 404. Additionally, this propagation time changes as both UE 402 and serving CMS 404 move with respect to each other. In order that opportunities for scheduling the transmission of positioning signals 420 do not consume inordinate resources allowing for long propagation times, serving CMS 404 and UE 402 preferably perform periodic ranging, including ranging on substantially every transmission from UE 402 to serving CMS 404, to determine and maintain a Tx time advance for transmissions from UE 402 to serving CMS 404, as is well known in the art. Tx Timing advance is a negative offset, and is the amount of time UE 402 transmits its signal early relative to their schedule position in the uplink subframe, allowing the serving CMS 404 to receive them on-time This offset at the UE 402 is necessary to ensure that the downlink and uplink subframes are synchronized at the Serving CMS 404. The serving CMS 404 continuously measures timing of uplink signals from UEs 402 and adjusts the uplink transmission timing by sending the value of Tx Time Advance, or an amount by which to adjust it, to the respective UE 402. As long as a UE 402 sends some uplink data, the serving CMS 404 can estimate the uplink signal arrival time which can then be used to calculate the required Tx Time Advance value. UE 402 preferably transmits positioning signal 420 early by Tx time advance, intending the positioning signal 420 to be received at the serving CMS 404 at the scheduled time, plus or minus the possible change in relative position since the last periodic ranging was performed. This allows a much shorter time duration for the scheduled opportunities in which to transmit the positioning signal 420. Even though the other CMS 406 are at different distances from UE 402 than serving CMS 404, the altitude contribution to propagation time of signals from UE 402 to Other CMSs 406 will be significantly reduced by the Tx time advance from UE 402 to serving CMS 404. Opportunities to receive the propagation signal 420 at the other CMSs 406 will still have more uncertainty than at serving CMS 404 and will therefore need to be scheduled to take resources for a longer period of time which is constellation dependent.

The positioning signal 420 preferably contains constructs, such as preambles, allowing ranging, which therefore allow clock synchronization. The positioning signal 420 may also contain an ID, such as a MAC ID, for UE 402. Positioning signal 420 may also contain a field $T_{trans}$, indicating when UE 402 transmitted positioning signal 420 in case it is different from the time it is expected to be received by serving CMS 404 minus the Tx time advance for UE 402. The serving CMS 404 receives the positioning signal 420 from UE 402 and determines the time of arrival, $T_{arriv}$. Preferably, serving CMS 404 sends a message 422 containing $T_{trans}$, calculated from $T_{arriv}$ and the Tx time advance for UE 402 or extracted from positioning signal 420, $T_{arriv}$, and the position of serving CMS 404 at time $T_{arriv}$ to position computation entity 408. Message 422 may also contain the ID of UE 402. Similarly, the other CMSs 406 each send a message 424 containing their measurement of $T_{arriv}$, the position of other CMSs 406 at time $T_{arriv}$, and $T_{trans}$ if included in the positioning signal to position computation entity 408. As will be described below, position computation entity 408 calculates the UE position 426 at a time, such as $T_{arriv}$ as measured by serving CMS 404, or some other time related to the transmission of the positioning signal. The more informed the position computation entity 408 is about the orbits of the CMS, the more accurate the UE position 426 will be. Serving CMS 404 forwards UE position 426 to UE 402 as UE position 428, which may be reformatted, for instance to remove the positions of other UEs which may have also been included in UE position 426.

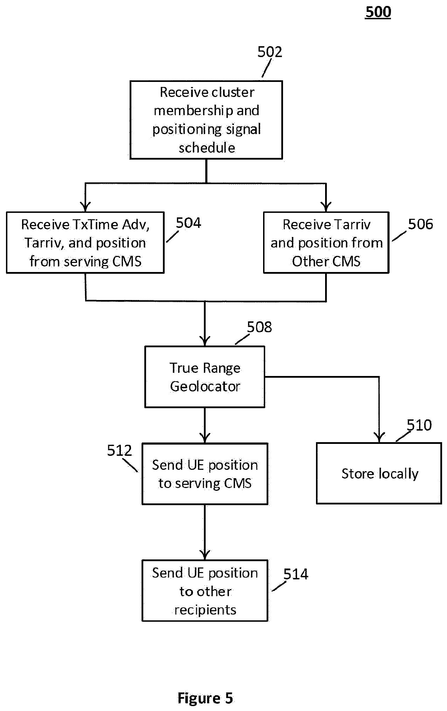

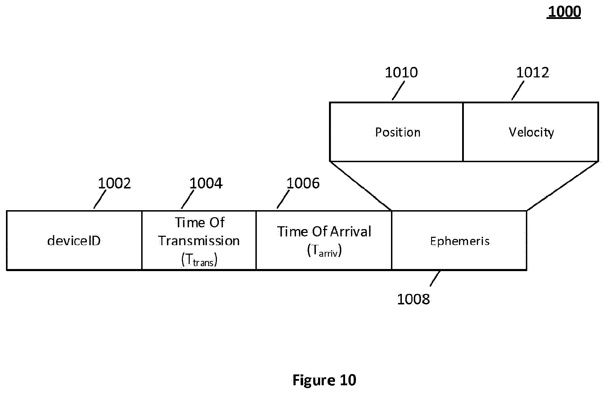

**Figure 5** shows flowchart 500 illustrating the functionality of a position computation entity 408. At step 502, position computation entity 408 receives an indication of which satellites will be members of the cluster for determining the position of a UE and the schedule indicating when the UE will transmit its positioning signal. At step 504, the Tx time advance or $T_{trans}$, and $T_{arriv}$ are received from the serving CMS, along with the position of the serving CMS at $T_{arriv}$ and the UE device ID. At step 506, $T_{arriv}$ at each of the other CMSs and the position of the other CMSs at $T_{arriv}$ are received. Note that steps 504 and 506 may happen in any order, and step 506 happens for each other CMS in the cluster. Each CMS in the cluster measures its own $T_{arriv}$ which may be different than that of the other satellites in a cluster. Tx time advance or $T_{arriv}$ from the serving CMS and $T_{arriv}$ and CMS position from all cluster members are passed to true range geolocator 508 which calculates the UE's position in step 508. The algorithm of true range geolocator 508 is explained later in Figure 10. In step 512, the position computation entity passes the UE position to the serving CMS. At step 510, the position computation entity optionally saves the UE's position in a local database. At step 514, the position computation entity optionally sends the UE's position to other recipients, such as a ground station, or a central database that can be queried by LBSs.

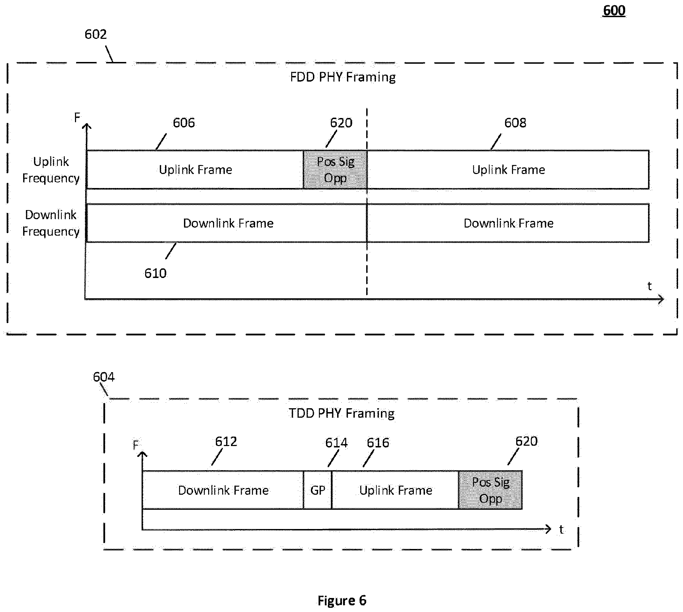

**Figure 6** illustrates two embodiments of PHY frames that provide opportunities to transmit positioning signals. FDD PHY framing 602 depicts a structure that may be used when using Frequency Division Duplexing (FDD), while TDD PHY Framing 604 represents a structure for Time Division Duplexing (TDD) with an optional duplexing gap 614. Since the location of a UE is being calculated by the satellites instead of the UE, the downlink PHY frames 610 and 612 remain unchanged other than sending previously described schedule and position messages to the UE. The standard uplink frame 608 for FDD (not shown for TDD) is periodically replaced by modified uplink frame 606 and 616 to provide positioning signal opportunities 620 for UEs to transmit positioning signals. The positioning signal opportunity 620 is preferably separate from the remainder of the uplink frame to more efficiently coordinate multiple CMS, most of which except the serving CMS have not derived a Tx time advance for the UE's, listening for the positioning signals from one or more UE's. Positioning signal opportunity 620 may not occur every frame. Positioning signal opportunity 620 may occur multiple times in a single frame. Positioning signal opportunity 620 at times may temporarily modify the PHY frame structure. Positioning signal opportunity 620 may be on a different, possibly dedicated, channel from data communications.

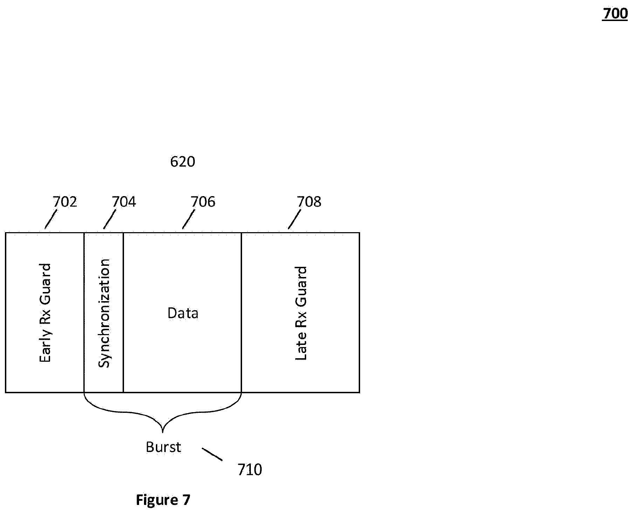

**Figure 7** illustrates an embodiment of the structure of a positioning signal opportunity 620. The positioning signal opportunity 620 is comprised of resources for a burst 710 transmitted by the UE and two guard periods 702 and 708. The burst 710 is comprised of two sections, a synchronization section 704 and an optional data section 706. Synchronization section 704 is any of a number of signal structures, known to one skilled in the art, and used to acquire and synchronize with a burst transmission. For instance, synchronization section 704 may be a preamble. In a preferred embodiment, synchronization section 704 is a preamble from a set of orthogonal preambles, allowing one or more UEs to be scheduled to use the same positioning signal opportunity 620. The UE preferably advances its signal, that is to say the UE transmits early, by the Tx time advance it has obtained through ranging with its serving CMS. That will allow synchronization section 704 to be received by the serving CMS as close to when expected as possible, although with some error due to motion of the UE and serving CMS relative to each other. If the error due to motion causes the UE and serving CMS to be closer to each other, the burst will be early, and the serving CMS will receive at least a portion of the preamble 704 in early Rx guard 702. If the error due to motion causes the UE and serving CMS to be farther from each other, the burst will be late, and the serving CMS will receive at least a portion of the burst 710 in late Rx guard 708. Early Rx guard 702 and late Rx guard 708 must be sized to allow the other CMSs to be at different distances from the UE and still receive the burst 710. By advancing the burst 710 by the Tx timing advance of the serving CMS, at least a portion of the altitude of the other CMS as well as the serving CMS is accounted for. For instance, the propagation time for a signal from a UE to a satellite at 1000km altitude is approximately 1/300 second. This allows positioning signal opportunity 620 to be shorter than if the Tx time advance were not used, taking less of the uplink frame. Optional data 706 portion of burst 710 may contain, for instance, the UE ID, and $T_{trans}$, the time the UE thinks it sent the burst 710.

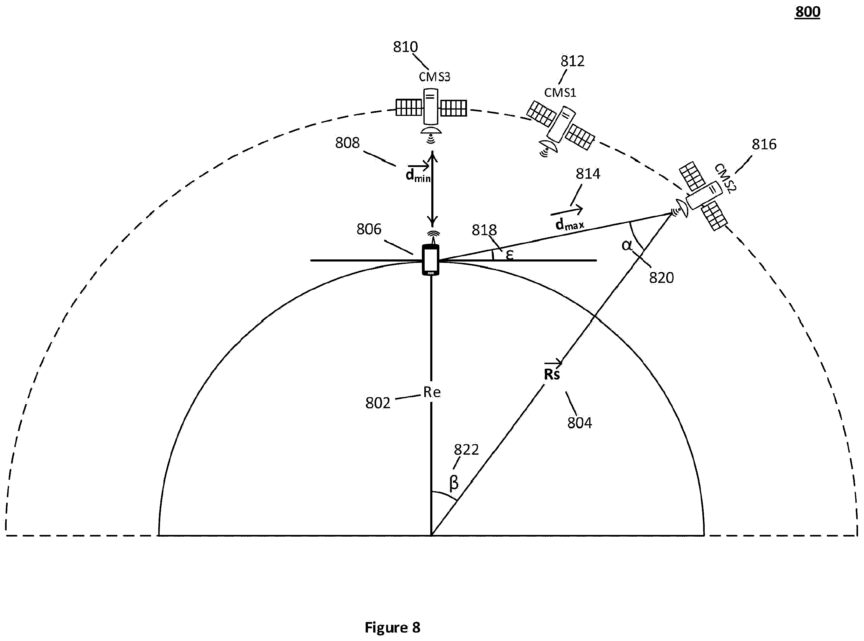

**Figure 8** illustrates a method to determine the duration of the Late Rx Guard 708 and Early Rx Guard 702. The duration of Early Rx Guard 702 and Late Rx Guard 708 can be determined by calculating the maximum ToF and minimum ToF of positioning signals sent by a UE 806 to satellites in a constellation. Min ToF and Max ToF can be determined by using the distance formula (T=d/c) where d could be minimum distance ($\|\overrightarrow{d_{min}}\|$) and maximum distance ($\|\overrightarrow{d_{max}}\|$) between UE 806 and CMSs. In 800, the angle 'ε' 818 is the minimum angle of elevation at which the UE 806 can maintain connectivity with a CMS. This value may be obtained empirically from knowledge of the constellation parameters, such altitude, and transmission parameters, such as max transmit power and transmit frequency. $\overrightarrow{d_{min}}$ 808 and $\overrightarrow{d_{max}}$ 814 are the minimum and maximum displacement vectors between the CMSs and the UE 806 ($\overrightarrow{d_{min}}$ for CMS3 810 and $\overrightarrow{d_{max}}$ for CMS2 816). CMS1 812 acts as the serving CMS. Re 802 is the earth's radius when the angle of elevation is 90°. $\|\overrightarrow{d_{max}}\|$ 814 can be calculated using the law of cosines

$$\left\|\overrightarrow{Rs}\right\|^2 = Re^2 + \left\|\overrightarrow{d_{max}}\right\|^2 - 2 * Re * \left\|\overrightarrow{d_{max}}\right\| * \cos(90° + \varepsilon) \qquad [1]$$

Where $\varepsilon$ is the minimum angle of elevation 818.
Solving for $\|\overrightarrow{d_{max}}\|$ 814 gives

$$\left\|\overrightarrow{d_{max}}\right\| = \sqrt{Re^2 * sin^2(\varepsilon) + \left\|\overrightarrow{Rs}\right\|^2 - Re^2} - Re * \sin(\varepsilon) \qquad [2]$$

Similarly, we can also determine the $\|\overrightarrow{d_{max}}\|$ 814 using the law of sines. Before applying the law of sines to find $\|\overrightarrow{d_{max}}\|$, we need to find the $\alpha$ 820 made between $\|\overrightarrow{d_{max}}\|$ 814 and the satellite orbit radius represented by vector $\|\overrightarrow{Rs}\|$ 804.

$$\frac{Re}{Sin(\alpha)} = \frac{\|\overrightarrow{Rs}\|}{Sin(90° + \varepsilon)} \qquad [3]$$

Rearranging the above equation, we can find the angle $\alpha$ 820.

$$\alpha = Sin^{-1}\left(\frac{Re * Sin(90° + \varepsilon)}{\|\overrightarrow{Rs}\|}\right) \qquad [4]$$

Now angle $\beta$ 822 can be computed as

$$\alpha + \beta + 90° + \varepsilon = 180° \qquad [5]$$

$$\beta = 90° - \varepsilon - \alpha \qquad [6]$$

Applying the law of sines with known angles $\alpha$ 820 and $\beta$ 822 and Re (earth's radius) 802 we can find $\|\overrightarrow{d_{max}}\|$ 814,

$$\|\overrightarrow{d_{max}}\| = \frac{Re}{Sin(\alpha)} * Sin(\beta) \qquad [7]$$

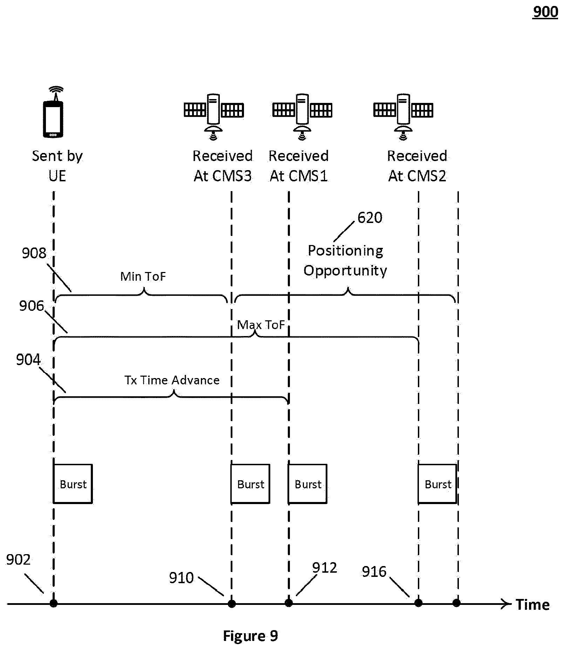

**Figure 9** illustrates how to determine of duration of positioning signal opportunity 620 using Min ToF 908 and Max ToF 906. In **Figure 8**, CMS1 812 is the serving CMS of UE 806 while CMS2 816 and CMS3 810 are other CMS. Positioning burst 620 is sent by UE 806 at time 902. The Tx time advance 904 ensures that the burst will arrive at CMS 1 close to some predefined time 912 of the positioning opportunity 620. For the other CMSs, the burst will arrive at some time between Min ToF 908 and Max ToF 906. For instance, the burst will arrive at CMS2 816 at time 916. This will happen during the Late Rx Guard Period 708. Similarly, the burst will arrive early at CMS3 810 at time 910 during the Early Guard Period. With respect to **Figure 7,** Early Rx Guard 702 must have a duration of at least Tx Time Advance minus Min ToF and Late Rx Guard must have a duration of at least Max ToF minus Tx Time Advance. The duration of positioning opportunity is at least (Max ToF - Min ToF + duration of burst 710). An additional time may also be allocated to positioning Opportunity 620 to account for motion, atmospheric delays, errors, multipath effects, contingency etc. In cases where serving CMS is located at the minimum distance from the UE, the duration of Early Rx Guard 702 before the expected arrival of burst in the positioning opportunity 620 will be zero or minimum (additional time to account for relative motion or other delays mentioned earlier) for serving CMS. Similarly, if the serving CMS is located at the maximum distance, the duration of Late Rx Guard in the positioning opportunity 620 for serving CMS will be minimum. The serving CMS is required to communicate the UE about the time in the positioning opportunity where the burst is expected to be received.

**Figure 10** shows an embodiment of the structure of the positioning information data frame 1000 received by a position computation entity 408 from a plurality of CMS 404 and 406 in the cluster taking position measurements. The device ID 1002 contains a unique identifier of the UE from which the CMS received a positioning signal at time $T_{arriv}$ 1006. The device ID 1002 is any information about the UE that could be used to uniquely identify the UE within the system, such as its MAC address in one aspect of the invention. For messages from serving CMS 404, $T_{trans}$ 1004 is preferably calculated from knowledge of the time when the positioning signal is received, $T_{arriv}$, and the Tx time advance for the UE. For other CMS 406, $T_{trans}$ is the time optionally sent by the UE in the data section 706 of positioning signal burst 710. The ephemeris data 1008 is composed of but not limited to the CMS's Position 1010 and optionally velocity 1012. Velocity 1012 is preferably used to reduce uncertainty caused by each CMS measuring a different $T_{arriv}$. The position 1010 and velocity1012 may be expressed in any format. In addition to position 1010 and velocity 1012, the ephemeris may also contain estimated future locations. In an embodiment, the orbits of the CMS are known to the position computation entity 408 and ephemeris data 1008 is not exchanged.

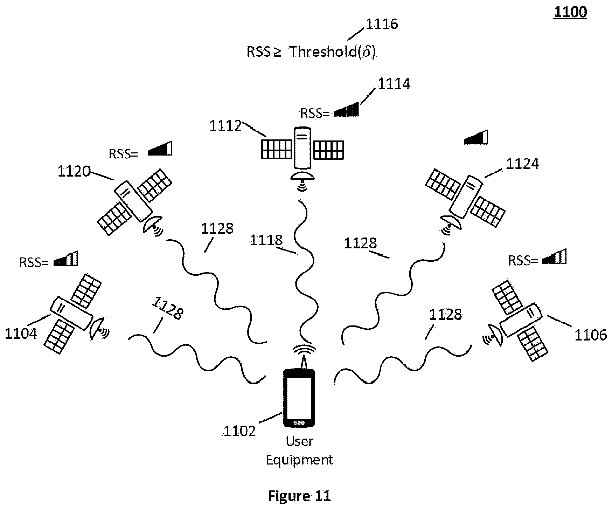

**Figure 11** illustrates a technique for using a signal quality metric, such as RSS, to choose the satellites that will form a cluster and act as CMS for determining the position of a UE. UE 1102 is preferably in communication with a serving satellite 1112 with which its communications over link 1118 has a strong RSS 1114. UE 1102 periodically listens to other nearby satellites 1104, 1106, 1120 and 1124 to assess the quality and strength with which it can hear their transmissions 1128. This is commonly done, for instance to prepare for handover and the same measurements may be used to choose cluster members. Depending on the trilateration algorithm used, three or four satellites, for instance satellites 1120, 1112, and 1124, are chosen to form the cluster. In an alternative embodiment, the first three or four satellites with RSS greater than a threshold 1116 are chosen to form the cluster. In alternate embodiments, other metrics of signal quality including but not limited to SNR and CINR may be used instead of or in conjunction with RSS.

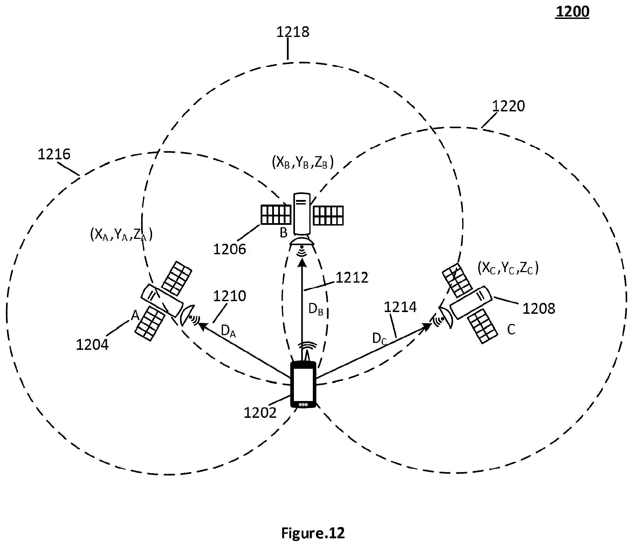

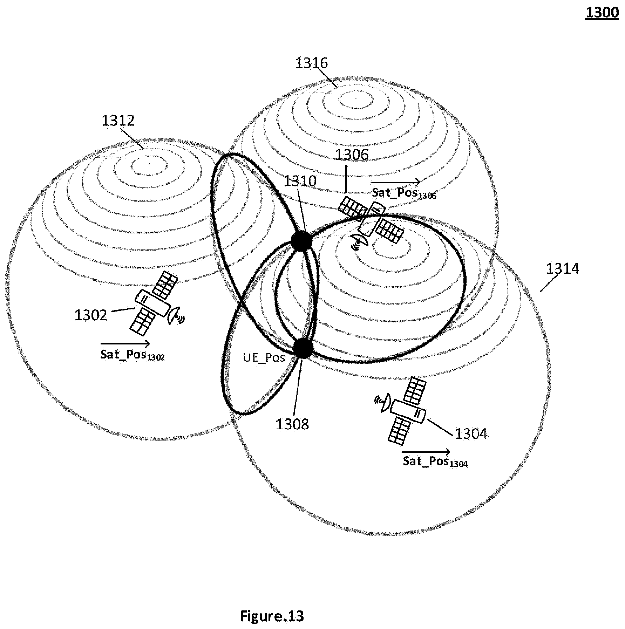

**Figure 12** illustrates finding the location of UE in a two-dimensional space. The two-dimensional visualization is provided solely for explaining of the concept of trilateration. The underlying theory can be applied to the three-dimensional scenario presented in **Figure 13.** $T_{trans}$ may be extracted by satellites 1204, 1206, and 1208 or calculated by the serving satellite 1206 from Tx Time advance and $T_{arriv}$. Distances 1210, 1212, and 1214 are calculated by finding out the difference between $T_{trans}$ and $T_{arriv}$, the time the positioning signal that is received by each of satellites 1204, 1206, and 1208 at their RF frontends. The calculated distances $D_A$ 1210, $D_B$ 1212, and Dc 1214 act as the radii of the circles 1216, 1218, and 1220 with CMSs A 1204, B 1206, and C 1208 at the centers. The intersection point of 1216, 1218, and 1220 is the geolocation of the UE 1202 at the time when the signal was transmitted. The accuracy of the location of UE 1202 depends on the number of CMSs' contributing to the calculation. As mentioned earlier, the location finding technique in true range geolocator 508 requires a minimum of three CMSs that can communicate with UE 1202.

**Figure 13** illustrates the location finding method of trilateration in a three-dimensional space. The UE is at point 1308 on the surface of the Earth. Three spheres 1312, 1314, and 1316 are formed with CMSs 1302, 1304, and 1306 at their centers, respectively. The radii of these spheres are the distances from the UE to each of the CMS they are centered on. For instance, sphere 1312 has a radius equal to the distance between CMS 1302 and the UE at point 1308 while sphere 1314 has a radius equal to the distance between CMS 1304 and the UE at point 1308. All three spheres intersect at only two points: 1308 and 1310. Point 1310 is above the CMSs while point 1308 is below them on the Earth's surface. While for some objects like a spacecraft the UE could be either below or above the satellites, a terrestrial UE such as a satellite enabled smart phone would be located at the lower point of intersection, point 1308, a point that is on the Earth's surface and not somewhere in space. The sphere 1312 can be represented by the simplified equation

$$R_{1312} = \left\| \overrightarrow{S\_Pos_{1302}} - \overrightarrow{UE\_Pos} \right\| \qquad [8]$$

Where $S\_Pos_{1302}$ represents the geolocation coordinates of the satellite 1302. UE_Pos represents the geolocation coordinates of the UE at 1308. Both geolocations are in some cartesian coordinate system such as Earth-centered, Earth-fixed (ECEF) coordinates.

$$R_{1314} = \left\| \overrightarrow{S\_Pos_{1304}} - \overrightarrow{UE\_Pos} \right\| \qquad [8]$$

$$R_{1316} = \left\| \overrightarrow{S\_Pos_{1306}} - \overrightarrow{UE\_Pos} \right\| \qquad [10]$$

The Radii $R_{1312}$, $R_{1314}$ and $R_{1316}$ can be calculated by multiplying the speed of light and the time of flight. For example:

$$R_{1312} = c * (T_{arriv\_1302} - T_{trans}) \qquad [11]$$

Using a similar method, the radii of CMS 1302 and 1304 can be computed. The equations may be represented by matrices as shown below

$$\begin{vmatrix} R_{1312} \\ R_{1314} \\ R_{1316} \end{vmatrix} = c * \left( \begin{vmatrix} T_{arriv\_1302} \\ T_{arriv\_1304} \\ T_{arriv\_1306} \end{vmatrix} - \begin{vmatrix} T_{trans} \\ T_{trans} \\ T_{trans} \end{vmatrix} \right) = \begin{vmatrix} \left\| \overrightarrow{S\_Pos_{1302}} - \overrightarrow{UE\_Pos} \right\| \\ \left\| \overrightarrow{S\_Pos_{1306}} - \overrightarrow{UE\_Pos} \right\| \\ \left\| \overrightarrow{S\_Pos_{1306}} - \overrightarrow{UE\_Pos} \right\| \end{vmatrix} \qquad [12]$$

The equation ignores ionospheric, tropospheric, multipath, ephemeris and other errors which are known to those skilled in the art. Once three equations are modelled, then they can be solved simultaneously to get the geolocation of UE 1202. If the number of equations get greater than 3, then one may use the nonlinear least squares or any other similar method known to those skilled in the art.

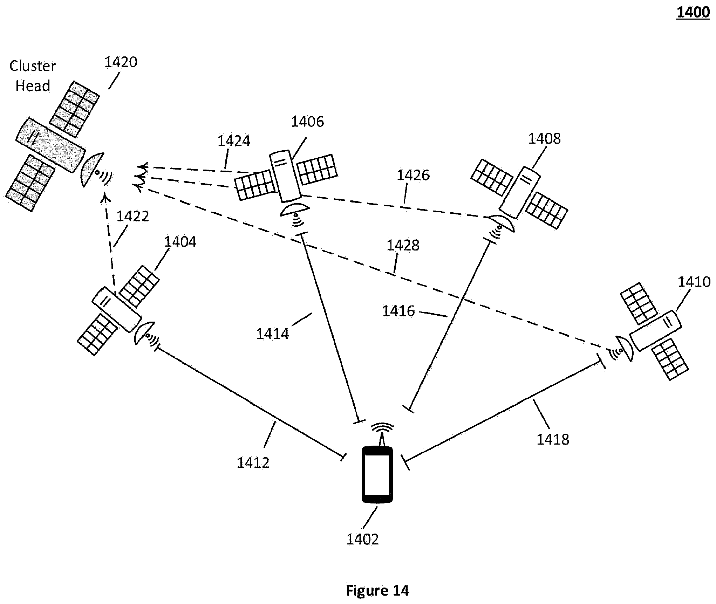

**Figure 14** illustrates an embodiment of a dedicated CHS that has a large memory and computing power enabling it to act as a position computation entity 408. CHS 1420 may be another satellite in the LEO constellation or may be a medium earth orbit (MEO) or geosynchronous earth orbit (GEO) satellite. In satellite system 1400, four CMSs indicated by 1404, 1406, 1408, and 1410 are shown. Each of these CMSs receives a positioning signal burst sent by UE 1402. Each CMS records the time it receives the signal, extracts $T_{trans}$, if present, from the data section of the positioning signal burst. Each CMS transmits a positioning info frame 1000 to the CHS 1420 through connections 1422, 1424, 1426, and 1428. CHS 1420 is responsible for computing the distance of each CMS from the UE 1402 by using the difference of $T_{arriv}$ and the time the signal was expected to have been sent, either the extracted $T_{trans}$, or $T_{arriv}$ - Tx time advance at the serving CMS. The distances from CMSs 1404, 1406, 1408, and 1410 are indicated by 1412, 1414, 1416, and 1418 respectively. Once the distance of each CMS from UE 1402 is calculated, the true range geolocator 508 can find the geolocation coordinates of UE 1402 using trilateration.

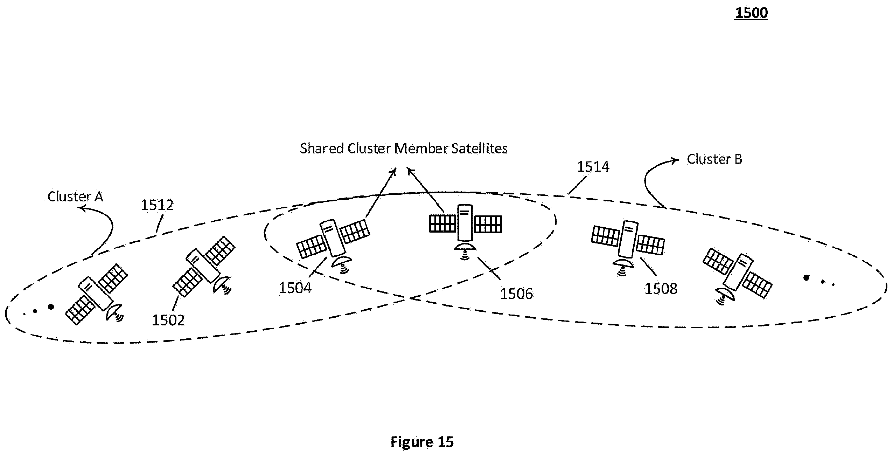

**Figure 15** illustrates the sharing of CMSs among multiple clusters. For example, CMS 1504 and CMS 1506 are shared between the cluster A 1512 and cluster B 1514. Both can directly establish a connection with the position computation entity of each cluster. On the other hand, CMS 1502 and CMS 1508 only belong to a single cluster and hence only need access to the position computation entity of their respective cluster. Each cluster may be formed to cover a geographic area or may be formed to cover specific UEs in a geographic area. The members of a cluster active in calculating the location of a particular UE or set of UEs may change as the CMS move. According to an aspect, each CMS needs to share the $T_{arrival}$ and optionally $T_{trans}$ with the position computation entity that is responsible for computing the position of the UE from which the data was gathered.

## EP 4 209 798 A1

**Claims**

1. A system for determining a geolocation of a user equipment (UE) device using a non-terrestrial network (NTN) comprising a plurality of network devices forming a cluster within the NTN, the UE device being structured and configured to generate and transmit a positioning signal, the system comprising:
   a position computation entity structured and configured to:

   receive information indicative of a time of transmit of the positioning signal by the UE device;
   receive for each of the network devices in the cluster (i) a time of arrival of the positioning signal at the network device, and (ii) a position of the network device at the time of arrival; and
   determine the geolocation of the UE device based on (i) the time of transmit of the positioning signal by the UE device, (ii) each positioning signal time of arrival, and (iii) each network device position at time of arrival.

2. A system according to claim 1, wherein the position computation entity is one of the network devices of the cluster.

3. A system according to claim 1, wherein the position computation entity is an additional network device of the NTN not forming part of the cluster.

4. A system according to claim 1, wherein the position computation entity is the UE device, a ground station or a service in the cloud.

5. A system according to any preceding claim, wherein the network devices are selected for inclusion in the cluster based on a signal quality metric relating to communications between each network device and the UE device.

6. A method for determining a geolocation of a user equipment (UE) device using a non-terrestrial network (NTN) comprising a plurality of network devices forming a cluster within the NTN, the UE device being structured and configured to generate and transmit a positioning signal, the method comprising:

   receiving information indicative of a time of transmit of the positioning signal by the UE device;
   receiving for each of the network devices in the cluster (i) a time of arrival of the positioning signal at the network device, and (ii) a position of the network device at the time of arrival; and
   determining the geolocation of the UE device based on (i) the time of transmit of the positioning signal by the UE device, (ii) each positioning signal time of arrival, and (iii) each network device position at time of arrival.

7. A method according to claim 6, wherein the receiving steps and the determining step are performed by a position computation entity that is one of the network devices of the cluster.

8. A method according to claim 6, wherein the receiving steps and the determining step are performed by a position computation entity that is an additional network device of the NTN not forming part of the cluster.

9. A method according to claim 6, wherein the receiving steps and the determining step are performed by a position computation entity that is the UE device, a ground station or a service in the cloud.

10. A method according to any one of claims 6 to 9, further comprising selecting the network devices for inclusion in the cluster based on a signal quality metric relating to communications between each network device and the UE device.

11. A system according to any one of claims 1 to 5, or a method according to any one of claims 6 to 10; wherein the geolocation of the UE device is determined using trilateration based on (i) the time of transmit of the positioning signal by the UE device, (ii) each positioning signal time of arrival, and (iii) each network device position at time of arrival.

12. A system or a method according to claim 11, wherein the trilateration is based on a determined distance of the UE device to each of the network devices.

13. A system according to any one of claims 1 to 5, 11 and 12, or a method according to any one of claims 6 to 12; wherein each of the network devices is one of a low earth orbiting (LEO) satellite, an unmanned aircraft system (UAS) or a high-altitude platform (HAP).

**14.** A system according to any one of claims 1 to 5, 11, 12 and 13, or a method according to any one claims 6 to 13; wherein the information indicative of the time of transmit of the positioning signal by the UE device is obtained from a transmission time provided as part of and extracted from the positioning signal.

**15.** A system according to any one of claims 1 to 5, 11, 12 and 13, or a method according to any one of claims 6 to 13, wherein the information indicative of the time of transmit of the positioning signal by the UE device is determined based on one or more of the positioning signal times of arrival and a transmit time advance for the UE device.

**100**

106  108

108

106

Cluster Head
Satellite

110

Cluster Member
Satellites

104

104

104

120

112

114  116  118

102

User
Equipment

Ground Station

Database
Server

Figure 1

EP 4 209 798 A1

**200**

202

```
┌ ─ ─ ─ ─ ─ ─ ─ ─ ─ ─ ─ ─ ─ ─ ─ ─ ─ ─ ─ ─ ─ ─ ─ ─ ─ ─ ─ ─ ┐
│                    User Equipment                        │
│                                                          │
│   204          206           208            210          │
│                                                          │
│ ┌─────────┐ ┌─────────┐ ┌───────────┐ ┌─────────────┐   │
│ │  User   │ │Processor│ │  Baseband │ │ RF Front End│   │
│ │Interface│ │         │ │ Processor │ │             │   │
│ └─────────┘ └─────────┘ └───────────┘ └─────────────┘   │
│                                                          │
│ ┌─────────┐ ┌─────────┐ ┌───────────┐ ┌─────────────┐   │
│ │  Power  │ │ Memory  │ │ Precision │ │Signal Strength│  │
│ │         │ │         │ │   Clock   │ │  Evaluator  │   │
│ └─────────┘ └─────────┘ └───────────┘ └─────────────┘   │
│     212         214          216            218          │
│                                                          │
└ ─ ─ ─ ─ ─ ─ ─ ─ ─ ─ ─ ─ ─ ─ ─ ─ ─ ─ ─ ─ ─ ─ ─ ─ ─ ─ ─ ─ ┘
```

**Figure 2**

302

Cluster Member Satellite

306

Transceiver 1

308

RF Front End

310

Baseband
Processor

312

Transmission
Time Extractor

314

Signal Strength
Evaluator

316

Processor

318

Memory

320

Power

304

Precision Clock

322

Transceiver 2

324

Transceiver 3

Figure 3

EP 4 209 798 A1

**Figure 4**

**500**

Figure 5

600

602

FDD PHY Framing

F

606          620                    608

Uplink
Frequency    | Uplink Frame | Pos Sig Opp | Uplink Frame |

Downlink
Frequency    | Downlink Frame | Downlink Frame |

610

t

604

TDD PHY Framing

F

612          614  616                    620

| Downlink Frame | GP | Uplink Frame | Pos Sig Opp |

t

Figure 6

700

620

702 — Early Rx Guard

704 — Synchronization

706 — Data

708 — Late Rx Guard

710 — Burst

**Figure 7**

Figure 8

Figure 9

1000

1010    1012

| Position | Velocity |
|----------|----------|

1002    1004    1006

| deviceID | Time Of Transmission ($T_{trans}$) | Time Of Arrival ($T_{arriv}$) | Ephemeris |
|----------|----------|----------|----------|

1008

Figure 10

1100

1116

RSS ≥ Threshold(δ)

1114

RSS= 1112

1120

RSS= 1124

1128 1118 1128

RSS= 1128 1128 RSS=

1104 1106

1102 User Equipment

Figure 11

Figure.12

Figure.13

EP 4 209 798 A1

EP 4 209 798 A1

Cluster Head

1420

1424

1406

1426

1408

1422

1428

1404

1416

1410

1414

1412

1418

1402

**Figure 14**

1400

Figure 15

Europäisches
Patentamt

European
Patent Office

Office européen
des brevets

# EUROPEAN SEARCH REPORT

Application Number

EP 23 15 0564

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2018/111525 A1 (KEPLERIAN TECH INC [US]) 21 June 2018 (2018-06-21) * paragraphs [0025] – [0033]; figures 1-4 * | 1-15 | INV. G01S5/02 G01S5/14 |
| A | KR 2017 0142815 A (WOORIBYUL CO LTD [KR]) 28 December 2017 (2017-12-28) * paragraphs [0018] – [0027]; figures 1-3 * | 1-15 | |

TECHNICAL FIELDS
SEARCHED      (IPC)

G01S

The present search report has been drawn up for all claims

| Place of search | Date of completion of the search | Examiner |
|---|---|---|
| Munich | 24 May 2023 | Ciccarese, Corrado |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

....................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 15 0564

This annex lists the patent family members relating to the patent documents cited in the above-mentioned European search report.
The members are as contained in the European Patent Office EDP file on
The European Patent Office is in no way liable for these particulars which are merely given for the purpose of information.

24-05-2023

| Patent document cited in search report | | Publication date | Patent family member(s) | | Publication date |
|---|---|---|---|---|---|
| WO 2018111525 | A1 | 21-06-2018 | US | 2019210746 A1 | 11-07-2019 |
| | | | WO | 2018111525 A1 | 21-06-2018 |
| KR 20170142815 | A | 28-12-2017 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63266487